Europäisches Patentamt

European Patent Office

Office européen des brevets

(11) Publication number: **0 190 918**
A1

## (12) EUROPEAN PATENT APPLICATION

(21) Application number: 86300731.6

(22) Date of filing: 04.02.86

(51) Int. Cl.⁴: **H 02 K 29/12**
G 01 P 3/48, H 01 F 29/10

(30) Priority: 04.02.85 US 697656

(43) Date of publication of application:
13.08.86 Bulletin 86/33

(84) Designated Contracting States:
CH DE FR GB IT LI SE

(71) Applicant: THE GARRETT CORPORATION
9851-9951 Sepulveda Boulevard P.O. Box 92248
Los Angeles, California 90009(US)

(72) Inventor: Larsen, Richard Keith
321 East Terry Way
La Habra California(US)

(72) Inventor: McCarty, Frederick Briggs
1366 Stonewood Court
San Pedro California(US)

(74) Representative: Arthur, George Fitzgerald et al,
KILBURN & STRODE 30, John Street
London WC1N 2DD(GB)

(54) Position sensor/tachometer.

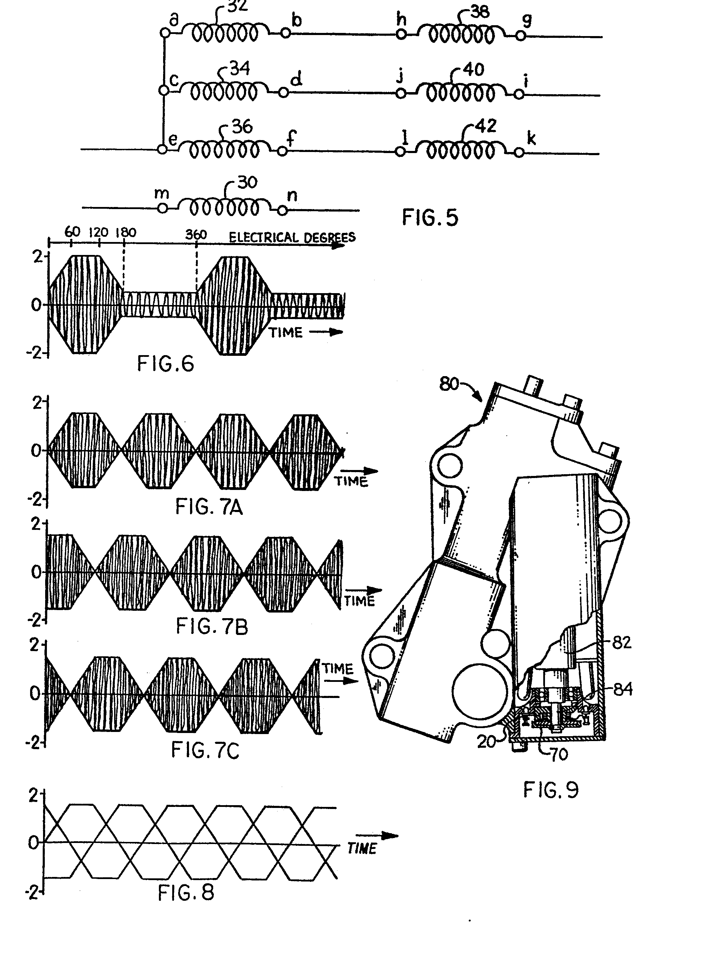

(57) A sensor for use with a d.c. brushless motor or other electrical device is disclosed which provides both angular position information and rate of rotation information from an integrated device. The device, which is preferably mounted at the end of the motor (82), uses a ferrite rotor (70) to connect the flux path between a single primary coil (30) and six secondary coils (32–42) arranged in reverse polarity pairs configuration (Figure 5). The resulting waveform (Figure 7) includes zero crossings and relatively straight rising and falling edges, with the zero crossings being used to provide information (at 104) used to electronically commutate (at 94) the d.c. brushless motor, and the rising and falling edges of the waveform providing (at 92) information about the speed of the motor.

FIG. 1

FIG. 3

POSITION SENSOR/TACHOMETER

This invention relates to apparatus for sensing the angular position and/or rotational speed of a shaft, and one application of such a sensor is to provide angular position and rate of rotation information controlling a brushless DC motor; there are other applications of such a sensor.

Functional requirements of DC motors in aircraft, missile, and spacecraft environments have resulted in the utilisation of brushless DC motors to cope with the problem of commutation at high altitude. This commutation problem, which was particularly severe in vehicles operating permanently above the atmosphere, has been solved by the utilisation of brushless DC motors. In addition, brushless DC motors have extended lifetimes when compared with normally commutated machines, making brushless DC motors even more desirable for aerospace applications.

The preferred type of brushless DC motor uses an electronic commutation scheme to eliminate the brushes, and requires a position-sensing device to synchronise the electronic commutation with the angular position of the rotor and with respect to the induced stator (armature) voltages of the motor. Information on the angular position of the rotor therefore controls the operation of switching devices such as transistors supplying power to the stator, thereby ensuring that the power supply to the stator is correct with regard to both magnitude and phase.

The field generated by the stator currents of the brushless DC motor is rotated approximately $90°$ ahead in space

2.

of the rotor field, therefore producing a torque on the rotor. Information on motor speed is utilized principally to supply a feedback signal indicative of the relationship between actual motor performance and commanded motor performance, which feedback signal is used to optimize response of the motor to an input command.

The preferred technique to date to provide angular position and rate of rotation information has been to provide a brushless synchro and a tachometer on the shaft of the rotor of the brushless DC motor. Brushless synchros, which provide a sine wave output which must be demodulated to provide angular position information, have as their principal disadvantage a fairly high price. In addition, since the brushless synchro only provides angular position information and not rate of rotation information, a tachometer must also be installed on the rotor shaft, adding further to the cost of providing the necessary information. In addition, a second demodulator is necessary to demodulate the signal provided by the tachometer. While both the brushless synchro and the tachometer are available in relatively small sizes, for aerospace applications it is always advantageous to provide the desired degree of performance in a package of minimal size and weight. For providing a cost competitive product, it is desirable to reduce the cost of the package including the expensive brushless synchro and the tachometer.

Two alternatives have been proposed. The first, described in United States Patent No. 3,501,664 to Veillette, describes the construction of a device of substantial complexity utilizing a multipole rotor and an annular stator

3.

with a plurality of teeth disposed radially inwardly, with the teeth being arranged in pairs with each member of a pair being offset from the point diametrically opposite the other member of the pair. While the Veillette device provides an alternative device having acceptable performance, the implementation of the device is difficult and expensive. The stator has a number of coils which must be wrapped around the stator itself, thereby making the cost of the Veillette device substantially similar to the cost of a brushless synchro. The disposition of the stator coils in a radially inward direction makes the size of the Veillette device somewhat larger than the brushless synchro, thereby making the brushless synchro/tachometer combination more desirable than the Veillette device.

The second alternative to the brushless synchro/tachometer combination is described in United States Patent No. 4,329,636, to Uchida et al. The Uchida device presents a unique approach for altering the magnetic flux density of a synchronous motor, with the alteration in flux being sensed to produce a position signal and a speed signal. The Uchida device, while technically interesting is not a solution to the problem of providing position and speed information regarding a brushless DC motor since the Uchida device must be designed integrally with the motor, rather than being adaptable to being installed at one end of the shaft of the motor. Secondly, and perhaps even more importantly, the Uchida device is not adaptable to operate with aerospace-type brushless DC motor systems, and will therefore likely remain useful only in earth-bound applications such as drive systems for turntables and cassette decks.

It may therefore be appreciated that the brushless synchro/tachometer combination has remained as the only viable device to provide angular position and rate of rotation information for aerospace type brushless DC motors.

According to one aspect of the present invention a sensor comprises a stator having primary and secondary coils and a rotor arranged when rotating to vary cyclically the magnetic coupling between the coils whereby an output from the secondary coil is characteristic of the relative speed and/or position.

The stator may have a magnetisable core, for example, of moulded ferrite defining discrete core segments for the primary and secondary coils and they may be open-ended so that prewound coils can be placed over them. There may be a single primary coil segment which can have an opening for the shaft and then there can be spaced secondary coil core segments arranged in a sector of an annulus around the primary segment.

The rotor is conveniently also of moulded ferrite to have a body portion adjacent the primary core segment and one or more lobes which pass adjacent to the secondary coil core segments as the rotor rotates. The lobes can be designed to produce an output wave form of a particular form as will be described in detail below. One convenient wave form has inclined sides of constant slope which is a measure of the rotor speed and has zero-cross points which define instants when the motor windings should be switched.

The device is simple and cheap to manufacture and can be easily fitted onto the shaft of an existing DC motor.

The device can be small and light and require only a single demodulating circuit.

According to a second aspect of the invention the speed of rotation and/or the instantaneous angle of position of a rotating shaft is measured using a sensor as defined above with the rotor rotated by the shaft; the primary coil of the sensor is conveniently energised at a frequency at least several times that at which a motor driving the shaft is driven.

According to a further aspect of the invention in a method of controlling a brushless DC machine having windings arranged to be cyclically switched to and from a DC supply a sensor as defined has its rotor driven by the motor shaft. The output from the secondary coils may be used to define the instant at which the motor windings are switched. The output from the sensor may be used to provide a feedback signal related to the motor speed.

In a preferred form of the invention a pair of secondary coils are mounted on the stator core angularly spaced about the primary coil so that the secondary coils have signals which are 180$^{\circ}$ out of phase with each other. For a four pole electrical machine they would be angularly displaced at 90$^{\circ}$ whereas for a six pole electrical machine they would be angularly displaced by 180$^{\circ}$. In one particular form of the invention for use with a four pole electrical machine the sensor has six secondary coils in an annular ring 30$^{\circ}$ apart from one another with each core being 15$^{\circ}$ wide. A two lobe rotor has the external angular extent of each lobe 70$^{\circ}$ and the inner angular extent of each lobe 45$^{\circ}$ with straight sides.

In an arrangement for a six pole machine the rotor has three lobes and there are six secondary cores each 10$^{\circ}$ wide with the first, second and third cores 40$^{\circ}$ apart and the

fourth, fifth and sixth cores 40° apart and the fourth core 180° from the first core. The external extent of the lobes are 50° and the internal extent 30°. The pairs of secondary coils are connected together in opposition.

The invention may be carried into practice in various ways and certain embodiments will now be described by way of example with reference to the accompanying drawings, in which:-

Figure 1 is a plan view of the stator of a sensor constructed according to the principles of the present invention, for use with a four pole motor;

Figure 2 is a cross-sectional view on the line 2-2 in Figure 1;

Figure 3 is a plan view of the rotor used with the stator shown in Figure 1;

Figure 4 is a cross-sectional view of the line 4-4 in Figure 3;

Figure 5 is a diagram showing the electrical connection of the primary and secondary coils of the stator shown in Figures 1 and 2;

Figure 6 illustrates a typical output of one of the six secondary coils of the stator shown in Figures 1 and 2;

Figure 7A shows a typical output of one pair of secondary coils shown in Figure 5;

Figure 7B shows a typical output of the second pair of secondary coils shown in Figure 5;

Figure 7C shows a typical output of the third pair of secondary coils shown in Figure 5;

Figure 8 shows the demodulated waveforms of Figures 7A, 7B and 7C in superimposed relationship;

Figure 9 is a plan view of an actuator with a portion cut away to show the installation of a sensor using the stator shown in Figures 1 and 2 and the rotor shown in Figures 3 and 4 installed thereon;

Figure 10 illustrates in schematic fashion the preferred configuration of the rotor for a four pole machine;

Figure 11 shows an alternative embodiment of the rotor for a four pole machine;

Figure 12 is a schematic diagram of a system using the sensor of the present invention; and

Figure 13 illustrates in schematic fashion a rotor and coil configuration for a six pole machine constructed according to the teachings of the present invention.

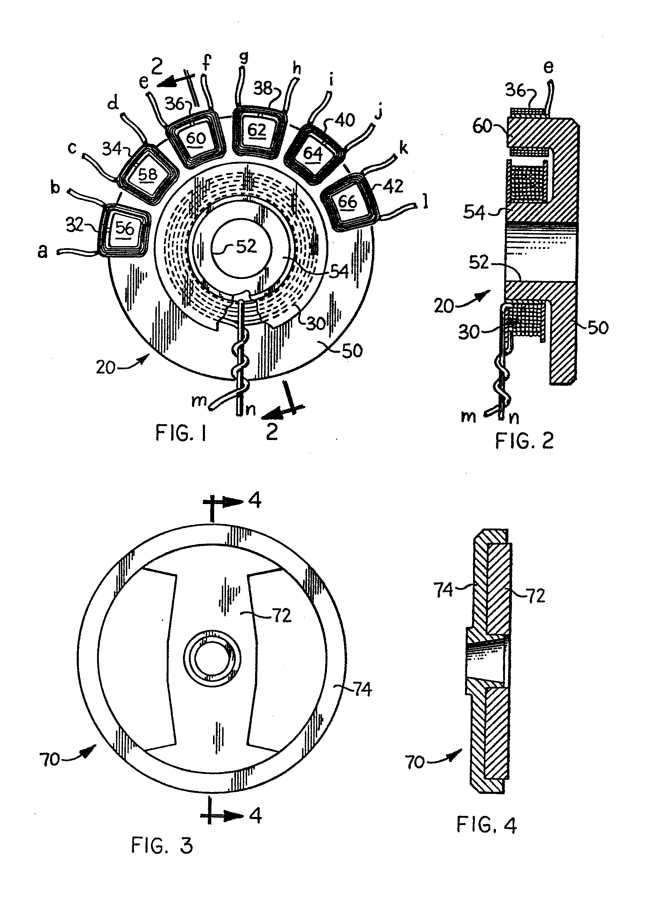

Figures 1-4 illustrate the present invention as embodied in a sensor for use with a four pole brushless DC motor. Although the description of the present invention utilises as an example a sensor designed for a three phase, four pole DC brushless motor, it will be recognised by those skilled in the art that the present invention may be adapted to work on machines having different numbers of poles or phases, and the utility of the sensor of the present invention is not confined to brushless DC motors but rather extends to any application where a compact and highly accurate sensor for providing angular position and rate of rotation information is required.

In Figures 1 and 2, a sensor stator 20 is illustrated which has a single primary coil 30 and six secondary coils 32,

8.

34, 36, 38, 40, and 42, all of which coils are mounted on a stator core 50. The stator core 50 is made out of a magnetizable material, preferably ferrite, which may be molded into the configuration illustrated. The stator core 50 has an aperture 52 through the center of the stator core 50 through which, in the preferred embodiment, the shaft of the rotor of a brushles DC machine may pass freely. It should be noted that mounting of the stator core 50 around the shaft of a machine is not necessary to the operation of the present invention.

Centrally located about the aperture 52 in the stator core is an axially extending primary core segment 54, on which the primary coil 30 is mounted. It is noteworthy that the primary coil 30 may be prewound before installation on the primary core segment 54, thereby significantly reducing the cost of assembly. The primary core 30 has two leads extending therefrom, namely leads m and n.

Located radially outwardly from the primary core segment 54 and around a portion of the outer circumference of the stator core 50 are six secondary core segments 56, 58, 60, 62, 64, and 66, all of which secondary core supports also extend in an axial direction for ease and installation of coils thereon. The six secondary coils 32, 34, 36, 38, 40, and 42 are mounted on the secondary core supports 56, 58, 60, 62, 64, and 66, respectively.

For the four pole machine design for the sensor stator 20 illustrated in Figures 1 and 2, the secondary core supports 56, 58, 60, 62, 64, and 66 are located 30° apart on the stator 20, with each secondary core support having an angular width of 15°. As will be discussed later, for other types of machines having differing number of poles, different coil arrangements may be utilized. Each of the secondary coils has two leads extending therefrom, with secondary coil 32 having leads a and b, secondary coil 34 having leads c and d, secondary coils 36 having leads e and f, secondary coils 38 having leads g and h, secondary coils 40 having leads i and j, secondary coil 42 having leads k and l.

The primary coil 30 and the secondary coils 32, 34, 36, 38, 40, and 42 may be potted following installation on the stator core 50. Potting material may be plastic or the like, and the potting operation helps to protect the coils from damage. The small currents in the coils do not generate enough heat to present a problem if the coils are potted.

Moving now to Figures 3 and 4, a two lobe rotor for use with stator shown in Figures 1 and 2 on a four pole machine is illustrated. A sensor rotor assembly 70 consists of two pieces, a rotor 72 and an optional rotor carrier 74. The rotor 72, which is preferably made of a magnetizable material such as ferrite, and which also may be molded, is carried in a rotor carrier 74, which is typically made of a non-magnetizable material such as aluminum or the like. The rotor 72 is fixedly contained in the rotor carrier 74, preferably by use of adhesives, and one side of the rotor 72 is exposed, as shown in Figure 4. This exposed side of the rotor 72 will be adjacent the sensor stator 20 shown in Figures 1 and 2, and will complete the flux path through the primary core segments 54 and certain ones of the secondary coils 32, 34, 36, 38, 40, and 42, depending on rotational position of the rotor and the stator core 50 itself.

10.

The rotor carrier 74 will be mounted onto and will rotate with the rotor of an electromechanical machine, such as the actuator 80 shown in Figure 9. The actuator 80 includes a DC brushless motor 82, which has a shaft 84. The shaft 84 extends through the aperture 52 (Figures 1 and 2) of the sensor stator 20, and is not connected to the sensor stator 20. At the end of the shaft 84, the sensor rotor assembly 70 is attached. In the preferred embodiment, the rotor carrier 74 has a central aperture which is angled slightly to fit on the similarly-shaped end of the rotor 84, with a nut or screw fixedly holding the rotor carrier 74 (and hence the rotor 72) to the end of the shaft 84. Since the rotor 72 itself is made of ferrite, which is somewhat brittle, it is desirable to use the rotor carrier 74 for attachment to the shaft 84 to prevent breakage of the rotor 72.

Referring now to Figures 1 and 5, the electrical connection of the six secondary coils 32, 34, 36, 38, 40, and 42 in the preferred embodiment is shown. The secondary coils are connected in a reverse polarity pairs configuration. What the term reverse polarity pairs configuration means is that one of the secondary coils will output a modulated signal envelope which is 180° out of phase with the other secondary coil of the pair, and this pair is subtractively connected. Secondary coils 32 and 38 are one pair, secondary coils 34 and 40 are the second pair, and secondary coils 36 and 42 are the third pair.

In order to better understanding the operation of the present invention, it is helpful to analyze electrical signals appearing on the various coils. First of all, the primary coil 30 is supplied with a high frequency oscillating signal typically in the range of 100 KHz. The primary frequency should be several times the frequency applied to the power windings of the motor in order to accurately resolve rotor position. At this point, it should be noted that the secondary coils 32, 34, 36, 38, 40, and 42 must all have the same number of turns, with the requirement that pairs of windings have identical numbers of turns being critical. In Figure 6, a typical output from secondary coil 32 is illustrated over a period of 360 mechanical degrees (one revolution of the rotor 72). In this period, the signal output from the secondary coil 32 will go through two complete 360° electrical cycles, since the rotor 72 has two lobes. For 180 electrical degrees the signal will rise to a peak, remain at that peak, and then fall to a minimum value. For an additional 180 electrical degrees, the output from the coil 32 will remain at that minimum value. This cycle is repeated twice in one mechanical revolution of the rotor 72 in a four pole machine.

Since coils 32 and 38 are hooked in an opposing relationship as described above, the output from this pair of coils will be similar to that illustrated in Figure 7A. The value will rise from zero to a maximum, stay at the maximum, and fall to zero, with the carrier signal voltage going through a phase reversal at zero crossings. Similarly, outputs from the secondary pair of coils, namely secondary coils 34 and 40, are illustrated in Figure 7B, and outputs from the third pair of coils, namely secondary coils 36 and 42 are illustrated in Figure 7C. If the output waveforms shown in Figures 7A, 7B, and 7C are demodulated and interposed on top of each other, the resulting output will be the complex waveforms shown in Figure 8.

At this point, by examination of the waveforms appearing across the secondary coil pairs it is seen that the waveforms have two important features. First, the waveforms cross the zero axis, with there being four crossings of the axis in one 360° mechanical revolution of the rotor 72. Since the example being discussed is for a four pole motor, the zero crossings may be used to control the commutation of the motor. By positioning the rotor 72 of the sensor in a particular relationship with the rotor of the motor 82 (Figure 9), and by also positioning the sensor stator 20 in a particular angular relationship to the stator of the motor 82, the zero crossings can be made to coincide at points at which commutation of the motor 82 is to occur. Therefore, it is apparent that these zero crossings may be used to control the commutation of the motor 82. Typically, adjustment of these commutation points is made by providing for a slight rotational adjustment of the sensor stator 20 in the actuator 80.

The second characteristic of the waveforms is that the rising and falling edges are relatively flat, meaning they have a relatively constant slope. Since the horizontal axis of the waveforms is time, the slope is therefore representative of the speed at which the rotor of the motor 82 is turning. Therefore, by measuring the slope of a rising or falling edge of the waveform, the speed of the motor can be determined, thereby providing information previously supplied by a tachometer.

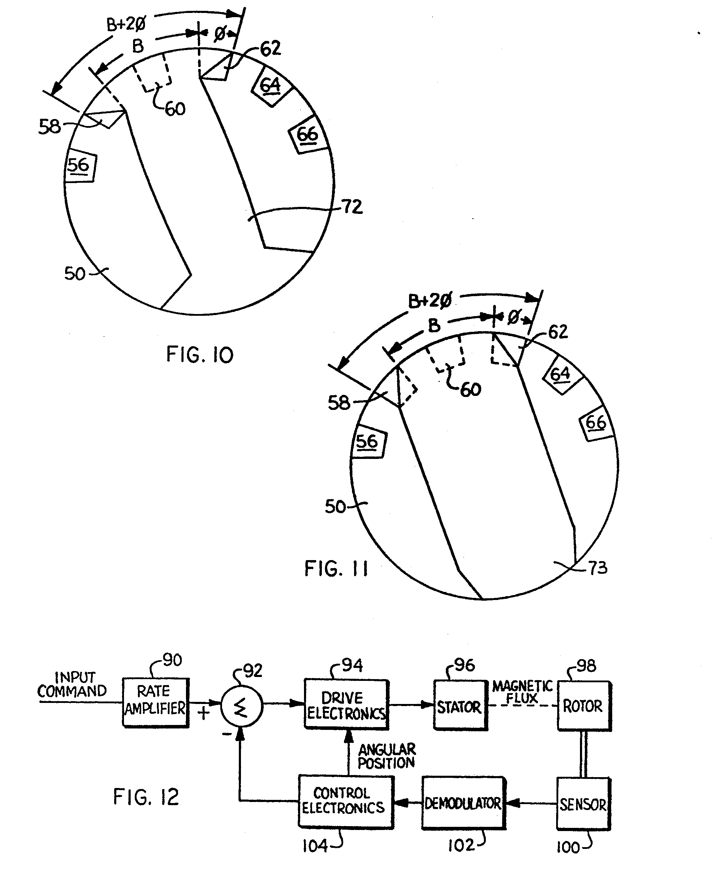

Referring now to Figure 12, a functional schematic of the controls of a DC brushless motor is illustrated in one possible embodiment. An input command representing a desired movement of the motor is supplied to a rate amplifier 90. The output from the rate amp 90, which is a rate command, is supplied to a summer 92, which will be mentioned later. The output from the summer 92 is supplied to a drive electronics package 94 which electronically commutates the stator field of the motor, shown schematically as 96. Magnetic flux from the stator field 96 causes the rotor 98 to rotate, thereby rotating the sensor 100. The sensor 100 will output electrical signals to a demodulator 102, which in turn supplies demodulated signals similar to those shown in Figure 8 to a control electronics package 104. The control electronics package 104 outputs a signal indicative of zero crossings containing information on angular position of the rotor 98 to the drive electronics 94, thereby indicating commutation points to the drive electronics 94. The control electronics package 104 also outputs information on the actual rate of rotation of the rotor 98 to the summer 92, thereby providing negative feedback enhancing system performance. It will be appreciated by those skilled in the art that this control scheme may be varied somewhat, with the variations being easily achieved by those skilled in the art.

One of the key aspects to providing information regarding the rate of rotation is that the waveforms shown in Figure 8 should have straight, or relatively straight, rising and falling edges. It has been found that by designing the rotor 72 of the sensor carefully, such flat edges in the output signals may be achieved. Figure 10 illustrates the rotor 72 in the preferred embodiment for the four pole configuration, with a specific rotor configuration defined by variables B and Ø. The arc width of one lobe of the rotor 72 at the outer periphery of the secondary coils is measured by the angle B + 2Ø, and the angular width of one lobe of the rotor 72 at the inner radius of the secondary coils is measured by an angle of B. For the four pole rotor configuration used as an example, to achieve the flat waveform, Ø should be equal to $15^O$, and B should be equal to $45^O$, and the sides of the lobes should be straight.

An alternative embodiment in design of the rotor of the sensor is illustrated in Figure 11, with a rotor 73. The rotor 73 has an outer angular measurement of B and an inner angular measurement of B + 2Ø. This design has been found to work fairly well.

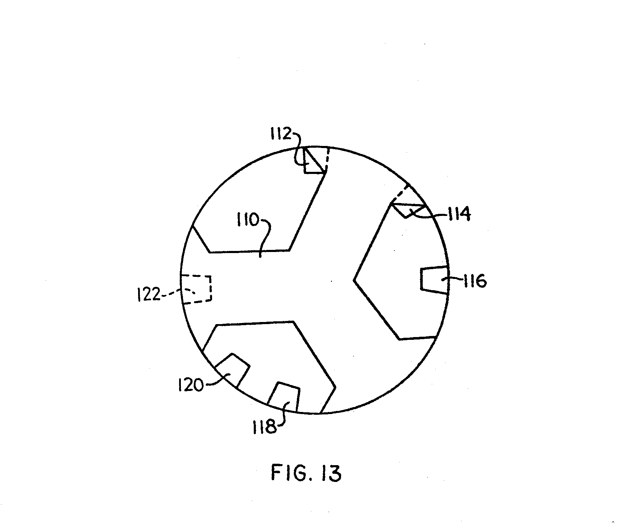

Finally, it is apparent to those skilled in the art that the teachings of the present invention may be applied to motors having various numbers of poles. An application using the first type of rotor (illustrated in Figure 10) adapted to six pole configuration and also the layout of the secondary windings is illustrated in Figure 13. The poles 112, 114, 116, 118, 120 and 122 are separated by $40^O$, and are in two groups of three poles each located $180^O$ apart. The rotor 110 is characterised by a B of $30^O$ and a Ø of $10^O$, giving it an outer angular measurement of $50^O$ and an inner angular measurement of $30^O$. It is apparent to those skilled in the art that one mechanical revolution of the rotor 110 will result in waveforms produced by the secondary coils 112, 114, 116, 118, 120 and 122 having three complete electrical revolutions, thereby producing six commutation points for the six pole machine. Adaptations for other numbers of poles are also possible, and will be readily apparent to those skilled in the art. It should also be recognised that the present invention, while discussed for use as a position sensor and velocity sensor for a DC brushless motor, has a number of other applications with other types of electrical machines, which should not be overlooked.

Utilization of the present invention provides significant advantages without any disadvantages whatsoever in a sensor for use with a DC brushless motor. Packages smaller than those previously used, and costing only a fraction as much to manufacture are now possible. Nevertheless, performance is of a high quality, and the device has long life characteristics.

CLAIMS

1. A sensor, for example for sensing the instantaneous angular position and/or the speed of rotation
of a rotating shaft (84), comprising a stator (20) having
primary (30) and secondary (32-42) coils, and a rotor
(70) arranged when rotating to vary cyclicly the magnetic
coupling between the coils, whereby an output (7, 8) from
the secondary coil is characteristic of the rotor speed
and/or position.

2. A sensor as claimed in Claim 1 in which the
stator (20) has a magnetisable core (50) e.g. of moulded
ferrite, having discrete core segments (54,56 - 66) for
the primary and secondary coils (30,32-42).

3. A sensor as claimed in Claim 2 in which the
core segments are open-ended, enabling pre-wound coils
to be placed over them.

4. A sensor as claimed in Claim 2 or Claim 3
in which there is a single primary coil core segment
(54) and spaced secondary coil core segments (56-66)
arranged in a sector of an annulus around the primary
coil core segment.

5. A sensor as claimed in Claim 4 in which the
primary coil core segment (54) has an opening (52) for
a shaft, the characteristics of whose rotation are to
be sensed.

6. A sensor as claimed in any of Claims 3 to 5 in which the rotor is arranged to rotate in a plane closely spaced from the open ends of the core segments.

7. A sensor as claimed in any of the preceding claims in which the rotor (70) is of magnetisable material e.g. of moulded ferrite, and has a body portion adjacent the primary coil core segment (54) and one or more lobes which pass adjacent the secondary coil core segments as the rotor rotates.

8. A sensor as claimed in Claim 7 in which the, or each, rotor lobe has an angular arcuate extent at one radial extremity of the secondary coil core segments of B and an angular arcuate extent at the other radial extremity of the secondary coil core segments of B + 2 ¢.

9. A sensor as claimed in any of the preceding claims arranged so that as the rotor rotates the output over at least a part of a cycle will increase or decrease substantially linearly at a rate related to the speed of rotation of the rotor (70).

10. A sensor as claimed in any of the preceding claims in which there are a plurality of secondary coils (32-42), the two coils of each pair being electrically connected with their outputs in opposition to produce from each pair an output having zero crossing points where the increasing or decreasing output changes sign.

11. A sensor as claimed in Claim 10 in which the outputs from all the pairs of secondary coils are combined to provide a sensor output.

12. A sensor as claimed in any of the preceding claims having its rotor connected to be rotated by a shaft whose speed of rotation and/or instantaneous angular position is to be sensed, for example the shaft of an electrical machine, for example a brushless d.c. motor controlled by cyclicly switching the power supply to its stator windings.

13. A method of measuring the speed of rotation and/or the instantaneous angular position of a rotating shaft using a sensor as claimed in any preceding Claim of which the rotor (70) is rotated by the shaft (84)

14. A method as claimed in Claim 13 in which the primary coil (30) of the sensor is energised at a frequency at least several times the frequency at which a motor driving the shaft is driven.

15. A method of controlling a brushless d.c. machine having windings arranged to be cyclicly switched to and from a d.c. supply, in which a sensor as claimed in any of Claims 1-12 has its rotor (70) driven by the motor shaft (84) and in which the output (Figure 7,8) from the secondary coils (32-42) is used to define the instants at which the motor windings are switched.

16. A method of controlling the speed of an electric motor in which the motor shaft drives the rotor of a sensor as claimed in any of Claims 1-12 and the output from the sensor is used to provide a feedback signal related to the motor speed.

FIG. 1

FIG. 2

FIG. 3

FIG. 4

FIG.5

FIG.6

FIG.7A

FIG.7B

FIG.7C

FIG.8

FIG.9

FIG. 10

FIG. 11

FIG. 12

FIG. 13

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | DE-B-1 175 783 (ASSOCIATED ELECTRICAL INDUSTRIES) <br> * Column 3, line 15 - column 6, line 34: column 7, lines 22-25; figures 1-4 * | 1-7,11 -15 | H 02 K 29/12 <br> G 01 P 3/48 <br> H 01 F 29/10 |
| X | GRUNDIG TECHNISCHE INFORMATIONEN, vol. 12, no. 9, September 1965, pages 923-926, Fürth, DE; W. JAHN: "Kollektor- und kontaktloser Gleichstrommotor mit vollelektronischer Drehzahlregelung" <br> * Page 923, column 2, line 13 - page 923, column 3, line 34; figure 1 * | 1-3,5- 7,11- 15 | |
| D,X | US-A-3 501 664 (VEILLETTE) <br><br> * Column 2, line 36 - column 3, line 44; column 4, line 49 - column 6, line 66; column 8, lines 44-75; figures 2,3,5,6,8 * | 1,4,9- 16 | TECHNICAL FIELDS SEARCHED (Int. Cl.4) <br><br> H 02 K <br> G 01 P <br> H 01 F |
| X | FR-A-2 183 726 (SIEMENS) <br><br> * Page 2, line 29 - page 4, line 22; figures 1,2 * | 1-3,6, 9-15 | |
| Y | US-A-3 221 246 (SANBORN) <br> * Column 2, line 41 - column 4, line 27; figures 2-5 * | 1,7-11 | |

--- -/-

The present search report has been drawn up for all claims

| Place of search | Date of completion of the search | Examiner |
|---|---|---|
| THE HAGUE | 06-05-1986 | TIO K.H. |

European Patent
Office

**EUROPEAN SEARCH REPORT**

| | **DOCUMENTS CONSIDERED TO BE RELEVANT** | | | Page  2 |
|---|---|---|---|---|
| Category | Citation of document with indication, where appropriate, of relevant passages | Relevant to claim | CLASSIFICATION OF THE APPLICATION (Int. Cl.4) | |
| Y | US-A-2 098 002  (GUERIN et al.)<br><br>* Page 1, right-hand column, line 49 - page 2, left-hand column, line 9; figures 7-9 *<br><br>----- | 1-3,6-8 | | |
| | | | TECHNICAL FIELDS SEARCHED (Int. Cl.4) | |

The present search report has been drawn up for all claims

| Place of search | Date of completion of the search | Examiner |
|---|---|---|
| THE HAGUE | 06-05-1986 | TIO K.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82